# EUROPEAN PATENT SPECIFICATION

(11) **EP 3 538 931 B1**
(45) Date of publication and mention of the grant of the patent: **05.07.2023**
(21) Application number: 17870034.0
(22) Date of filing: 07.11.2017
(51) Int. Cl.: G01V 1/38

(54) **MODULAR CONTAINERIZED SEISMIC SOURCE SYSTEM**
MODULARES CONTAINERISIERTES SEISMISCHES QUELLENSYSTEM
SYSTÈME DE SOURCES SISMIQUES MODULAIRE CONTENEURISÉ

(30) Priority: 09.11.2016 US 201662419619 P
(43) Date of publication of application: 18.09.2019
(73) Proprietor: Seabed Geosolutions B.V., 2264 SG Leidschendam (NL); Lamothe, Jean-François, Houston, Texas 77042 (US); Hartland, Martin John, Katy, Texas 77493 (US); Postic, Erwan Francois Marie, Houston, Texas 77042 (US)
(72) Inventor: HARTLAND, Martin John, Katy, Texas 77493 (US)
(74) Representative: Barker Brettell LLP
(86) International application number: PCT/US2017/060459
(87) International publication number: WO 2018/089382

(56) References cited:
- WO-A1-2016/020500
- US-A1- 2004 146 380
- US-A1- 2008 267 009
- US-A1- 2008 267 009
- US-A1- 2010 054 896
- US-A1- 2015 336 646
- US-B2- 7 929 378
- US-B2- 8 687 461

## Description

### BACKGROUND OF THE INVENTION

### PRIORITY

This application claims priority to U.S. provisional patent application no. 62/419,619, filed on November 9, 2016.

### FIELD OF THE INVENTION

This invention relates to seismic source vessels, and more particularly to the design of seismic source systems using modular containers, such as ISO certified containers.

### DESCRIPTION OF THE RELATED ART

Marine seismic data acquisition and processing generates a profile (image) of a geophysical structure under the seafloor. Reflection seismology is a method of geophysical exploration to determine the properties of the Earth's subsurface, which is especially helpful in determining an accurate location of oil and gas reservoirs or any targeted features. Marine reflection seismology is based on using a controlled source of energy (typically acoustic energy) that sends the energy through seawater and subsurface geologic formations. The transmitted acoustic energy propagates downwardly through the subsurface as acoustic waves, also referred to as seismic waves or signals. By measuring the time it takes for the reflections or refractions to come back to seismic receivers (also known as seismic data recorders or nodes), it is possible to evaluate the depth of features causing such reflections. These features may be associated with subterranean hydrocarbon deposits or other geological structures of interest.

In general, either ocean bottom cables (OBC) or ocean bottom nodes (OBN) are placed on the seabed. For OBC systems, a cable is placed on the seabed by a surface vessel and may include a large number of seismic sensors, typically connected every 25 or 50 meters into the cable. The cable provides support to the sensors, and acts as a transmission medium for power to the sensors and data received from the sensors. One such commercial system is offered by Sercel under the name SeaRay^{®}. Regarding OBN systems, and as compared to seismic streamers and OBC systems, OBN systems have nodes that are discrete, autonomous units (no direct connection to other nodes or to the marine vessel) where data is stored and recorded during a seismic survey. Each such node may have one or more seismic sensors, a data recording unit, a reference clock for time synchronization, and a power source. One such OBN system is offered by the Applicant under the name MANTA^{®}. For OBN systems, seismic data recorders are placed directly on the ocean bottom by a variety of mechanisms, including by the use of one or more of Autonomous Underwater Vehicles (AUVs), Remotely Operated Vehicles (ROVs), by dropping or diving from a surface or subsurface vessel, or by attaching autonomous nodes to a cable that is deployed behind a marine vessel.

If the nodes are autonomous seismic nodes on the seabed, a general seismic deployment and survey operation generally requires one or more surface vessels that deploy and/or retrieve autonomous seismic nodes from the ocean bottom (e.g. , the supply vessel). See, e.g. , U.S . Patent No. 9,090,319. The supply vessel may have a node deployment and retrieval system, such as that disclosed in U.S. Patent No. 9,459,366. In one embodiment, the supply vessel may utilize a fully containerized deployment system, such as described in U.S. Patent No. 9,784,873. This fully containerized deployment system is distinct from any separately utilized seismic source system on a separate seismic source vessel.

As described above, a standalone vessel (e.g. , a separate marine vessel from the seismic node supply vessel) is conventionally used as a seismic source vessel for sending acoustic energy into the ocean to be detected by the seismic nodes. As is known in the art, air guns are typically used as acoustic sources. These air guns are arranged in arrays and are towed and/or deployed behind the seismic source vessel a certain distance beneath the water surface (such as between 6 to 10 meters beneath the surface). A single source vessel may deploy four to six or more source sub-arrays, with each array comprising a gun float and a series of air guns connected together by a gun string and/or umbilical cable. In some embodiments, the air guns are suspended beneath the gun float by steel chain, wires, ropes, or other suitable mechanisms. The entire source array is lowered to the water from the back of a marine vessel by a series of hoisting wires, slings, winches, and the like. A seismic source array system is typically composed of approximately 20 to 50 airguns, which may be located at different horizontal and vertical positions and have different volumes. Such seismic arrays are known and described in the prior art, such as explained more fully in U.S. Patent Nos. 4,721,180 and 7,929,378.

Existing seismic source vessels typically use large, specially made equipment, machines, and modules/containers that take a long time to install on a standard vessel or must have their own dedicated seismic source vessels. The installation of such equipment may take weeks or months to install properly and may require a dedicated and/or specifically designed vessel to operate such equipment. Such a vessel is difficult to find, expensive to rent and/or to buy, and may require significant lead-time to purchase, lease, and/or build. In some instances, the vessels are purposely rebuilt to integrate the seismic source system into the structure of the vessel. When the vessel is not in use and/or is between jobs, rather than removing the deployment equipment and re-installing when the next seismic survey is to be performed, the equipment is typically left on the vessel, and the operator is forced to pay the daily rental rates of the vessel. If a dedicated vessel is used, it takes significant time and money to transport that dedicated vessel to an intended survey destination around the world. Such systems are costly, time consuming, and ineffective.

One problem with existing seismic source systems is transporting the system to the intended survey site and/or port to equip a standard vessel with the seismic source system. Transportation is a highly regulated industry, and existing seismic source systems are not capable of being easily transported. In some instances, the seismic source system (or portions thereof) are so cumbersome to transport that the intended source vessel is moved from one location in the world to a storage or fabrication facility to have the seismic source system installed at the storage facility, and then to transit the source vessel to the intended destination site of the survey. This is a costly and time-consuming process. Non-standardized shipping methods increase the cost and time to mobilize the seismic source system.

A container ship is a standard type of cargo ship that carries all of its payload in a container, commonly called shipping containers. A container ship is the predominant method of commercial freight sea transport and carries most seagoing non-bulk cargo around the world. Containerization (e.g., the shipping of goods via standard containers in a standard shipping container) significantly reduces shipping time and costs, and much like the airline industry, has a set schedule of times, destinations, and routes for ports and routes all around the world. However, the transportation industry has regulated container ships and sea transportation, and only ISO certified containers may be used on a container ship. The ISO regulations require that the ISO certified container meets certain size, strength, and durability requirements. Further, an ISO container has a maximum weight limitation. This standardization allows rapid movement, placement, and fastening of containers to the container ships. Not all containers are shipping containers, and not all shipping containers are ISO certified containers. While non-ISO certified containers may be able to transport via air, truck, or train, typically only ISO certified containers are capable of being transported via a container ship.

What is needed is a seismic source system that may be stored, transported, and operated in a cost effective and time sensitive manner. A system is needed that can fully transport, store, and operate most or all of such a system in one or more CSC ("International Convention for Safe Containers") approved ISO containers that can be transported via standard shipping routes and mobilized on a suitable vessel using conventional installation techniques. A system is needed that can be easily and quickly installed and/or mobilized on any number of readily available marine vessels. A seismic source system is needed that is fully modular.

US2008267009 discloses systems and methods for marine seismic cable deployment and retrieval. One system comprises a plurality of portable containers, each container temporarily storing a marine seismic component, at least some of the containers able to be removably fastened to a deck of a vessel of opportunity, and at least one of the portable containers storing a main cable winch on which is wound a marine seismic cable.

WO2016020500 discloses apparatuses, systems and methods, for automatically attaching and detaching seismic devices to a deployment cable, including a plurality of autonomous seismic nodes. A node installation system may include a moveable node carrier coupled to a cable detection device and a node attachment device that is configured to move a direct attachment mechanism on a node into a locking or closed position about the deployment cable. In an embodiment for retrieval and/or detachment operations, the system may also be configured to automatically detect the position of a node and remove the node from the deployment line by actuating the direct attachment mechanism into an open or unlocked position. Other devices besides a node may be attached and detached from the deployment line if they are coupled to one or more direct attachment mechanisms.

US2010054896 discloses a method including positioning an elevated handling beam in a slip of a marine vessel, the handling beam extending from an inboard position to an outboard positioned proximate to an open slipway; and moveably positioning a handling winch on the handling beam, the handling winch capable of selectively connecting with a gun assembly and moving the gun assembly vertically and laterally relative to the handling beam.

### SUMMARY OF THE INVENTION

Systems and methods for operating a modular and/or containerized seismic source array system from a marine vessel and installation of same on any vessel of opportunity according to independent claims 1, 12 and 13. The modular seismic source array system may be transported, stored, and operated in a plurality of shipping containers, each of which may be CSC approved ISO containers. The containers are attached to the marine vessel by a grid attachment frame installed on the back deck of the vessel, such that a wide variety of layouts and configurations of the seismic source system is possible depending on the survey requirements and marine vessel. The containers may be placed longitudinally and transversely on the grid attachment frame and may be multiple levels high. A detachable and/or removable slipway may be utilized on the rear end of the marine vessel to facilitate deployment and retrieval of the source arrays. The slipway may be transported to and from the vessel via a container, whether on top of a container or within the container. The slipway may be removably attached to the transom section of the vessel by a wide variety of mechanisms. The modular source system can be combined with an ocean bottom node storage or node deployment or node recovery system on the same vessel by utilizing same or similar container footprints. For example, the modular source system may be substantially located on a first level while the node storage, deployment, or recovery system may be substantially located on a second level on top of the first level, or vice versa. In other embodiments, the containerized system may further comprise an ocean bottom node storage system located within a second plurality of shipping containers located at least partially on top of the first group of the plurality of shipping containers. Further, the system may include an ocean bottom node deployment or recovery system located within a third plurality of shipping containers located at least partially on top of the first group of the plurality of shipping containers.

In one embodiment, disclosed is a containerized seismic source system that comprises a plurality of shipping containers located on a back deck of a marine vessel and a seismic source handling system located within a first group of the plurality of shipping containers. The seismic source handling system is configured to deploy and retrieve a plurality of seismic source arrays from the back deck of the marine vessel to a body of water, such as across each of the first group of the plurality of shipping containers. In one embodiment, each of the first group of the plurality of containers is arranged transverse on the back deck of the marine vessel, and the source arrays pass through and/or travel through a side of each of the transversely placed containers. Each of the first group of the plurality of containers may comprise open sides or removable sidewalls, which may be arranged to allow the source array lines to pass through the containers. A plurality of source handling rails are located in each of the first group of the plurality of containers and configured to transport the source array lines through the containers. In one embodiment, all of the shipping containers are arranged transversely on the back deck of the vessel. In another embodiment, substantially all of the containers are arranged transversely on the back deck of the vessel and one or more are arranged longitudinally, such as the compressor containers.

The present disclosure may also include a detachable slipway coupled to a back portion of the marine vessel, such as by a plurality of slipway interfaces separately installed to the marine vessel. The slipway may also be coupled to the transom portion of the vessel by a plurality of ISO connections, which may be installed on a plurality of support members separately welded or installed on the rear portion of the vessel. The slipway may be configured to be transported to and from the marine vessel via a shipping container.

The plurality of shipping containers may be fastened to the back deck of the marine vessel by a container grid attachment frame, wherein the frame comprises at least a plurality of longitudinal bars, and in some embodiments a plurality of horizontal bars coupled to the longitudinal bars. The plurality of shipping containers may comprise a plurality of CSC approved ISO containers. In some embodiments, all or substantially all of the containers are CSC approved ISO containers. The plurality of shipping containers may comprise a lower plurality of shipping containers and an upper plurality of shipping containers located on one or more of the lower plurality of shipping containers. In one embodiment, at least one of the plurality of shipping containers comprises an umbilical winch system, in which may be located a plurality of double winch systems. For transportation purposes, at least one of the plurality of double winch systems is removable from the container during transportation of the container to and from the vessel. In one embodiment, the plurality of shipping containers comprises a systems hub container that is configured to couple all electrical and fluid connections from the marine vessel to the containerized source system.

In one embodiment, disclosed is a containerized seismic source system that comprises a seismic source handling system located within a first plurality of shipping containers located on a back deck of a marine vessel, an ocean bottom node storage system located within a second plurality of shipping containers located on the back deck of the marine vessel, and an ocean bottom node deployment or recovery system located within a third plurality of shipping containers located on the back deck of the marine vessel. The seismic source handling system may be configured to deploy and retrieve a plurality of seismic source arrays from the back deck of the marine vessel to a body of water, the node storage system may be configured to store a plurality of ocean bottom autonomous nodes on the marine vessel for deployment purposes, and the node deployment or recovery system may be configured to deploy and/or retrieve a plurality of autonomous seismic nodes from the vessel to the ocean floor, via one or more deployment lines, subsea baskets, or ROVs. In one embodiment, the ocean bottom node storage system is located at least partially on top of the seismic source handling system, and the ocean bottom node deployment or recovery system may be located at least partially on top of the seismic source handling system or ocean bottom node storage system.

In one embodiment, disclosed is a method of deploying a seismic source array from a marine vessel, comprising deploying a plurality of seismic source arrays off a back deck of a marine vessel from a plurality of shipping containers and deploying each of the plurality of seismic source arrays through each of the plurality of shipping containers. The plurality of shipping containers are transversely positioned on the marine vessel, such that each of the seismic source array lines pass through each of the plurality of shipping containers.

In one embodiment, disclosed is a method of installing a modular seismic source array system onto a marine vessel, comprising attaching a grid attachment frame to a back deck of the marine vessel, coupling a plurality of containers to the grid attachment frame, and coupling a detachable slipway to a rear portion of the marine vessel. In one embodiment, the slipway is installed to the rear portion of the vessel by a plurality of ISO connections (such as standardized twistlock connections) and/or support structures that are separately welded to the transom of the vessel. In one embodiment, a seismic source handling system is located within at least some of the plurality of containers and is configured to deploy and retrieve a plurality of seismic source arrays from the back deck of the marine vessel to a body of water.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.
FIG. 1 illustrates one embodiment of a seismic source system on a marine vessel.
FIGs. 2A-2C illustrate one embodiment of a seismic source system from a perspective, side, and top view.
FIG. 3 illustrates one embodiment of an umbilical winch system container for the disclosed seismic source system.
FIGs. 4A and 4B illustrate one embodiment of a source array handling system for the disclosed seismic source system.
FIGs. 5A-5B illustrate one embodiment of a slipway for a seismic source system.
FIGs. 6A-6C illustrate one embodiment of attaching the slipway from FIGs. 5A and 5B to the vessel.
FIG. 7 illustrates one embodiment of a container attachment grid frame/structure for attaching a containerized seismic source system to a marine vessel.
FIG. 8A-8I illustrate one embodiment of a method for attaching a containerized seismic source system to a marine vessel.
FIG. 9 illustrates one embodiment of a modular seismic source array system with a modular node storage, deployment, and/or retrieval system on the same marine vessel.

### DETAILED DESCRIPTION

Various features and advantageous details are explained more fully with reference to the nonlimiting embodiments that are illustrated in the accompanying drawings and detailed in the following description. Descriptions of well known starting materials, processing techniques, components, and equipment are omitted so as not to unnecessarily obscure the invention in detail. It should be understood, however, that the detailed description and the specific examples, while indicating embodiments of the invention, are given by way of illustration only, and not by way of limitation. Various substitutions, modifications, additions, and/or rearrangements within the scope of the appended claims will become apparent to those skilled in the art from this disclosure. The following detailed description does not limit the invention.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

### CONTAINERIZED SYSTEM

As mentioned above, the disclosed seismic source system utilizes standard sized shipping containers to house all of the necessary components of the seismic source system for storage, transportation, and use on the back deck of a marine vessel. In one embodiment, the shipping containers are CSC approved ISO containers so that the seismic source system (or parts thereof) can be entirely transported anywhere around the world on standard container ships. In one embodiment, the disclosed seismic source system is fully modular, in that the system is built out of units that can be interchanged and combined in different ways to give alternative layouts, with each module having a specific purpose. In some cases, less or more modules may be needed for a different seismic source configuration.

The disclosed system is safer and saves significant money and time for each seismic survey operation as opposed to conventional seismic source systems. For example, there is no need to separately install any of the devices or equipment of the seismic source system directly to the vessel. Instead, only the containers must be fastened and/or secured to the vessel, and more particularly, a fastening system may be mounted to any vessel of opportunity upon which the containers may then be mounted. For ISO approved containers, the fastening process is standardized and may take only a few days to install the system to a vessel as opposed to weeks or months of installation time for a typical seismic source system. As another example, because ISO certified containers may be utilized, the containers can be transported via any standard shipping route, such as air, road, train, or sea, to a destination harbor and mobilized on a suitable marine vessel. In one embodiment, the marine vessel may be any vessel of opportunity. Further, such a system can be transported to any remote destination in the world in a matter of a few days, in contrast to a conventional system that may take weeks or months to ship to a remote destination. The ability to transport the entire system in a fast and efficient manner provides numerous advantages, such as being safer to transport and install, decreasing the lead time needed to find and engage a suitable transportation vessel as well as a marine deployment/source vessel (which often may take months in advance with current deployment systems), and being significantly more cost effective to transport (both in time and money) than conventional seismic source systems. A fully containerized and/or modular source system may also protect operators from being exposed to harsh weather conditions (thereby increasing their safety) and facilitates operation systems and surveys in harsher conditions than previously possible. A containerized system allows crews and equipment to be efficiently managed and shared without substantial cost, including combining crews and equipment to meet the demands of extremely large seismic surveys.

In one embodiment, the contents of each container may be modified for the particular task of the container. The containers may be transferred to the deck of a vessel via a crane or other lifting device and then secured to the deck and coupled to each other through various fastening mechanisms. The containers may be positioned side to side, end to end, and even on top of each other (up to 3 or 4 or more levels high) on the deck depending on the specific layout of the containers, needs of the survey, and requirements of the vessel. The system setup may vary from job to job and from vessel to vessel, in both layout and number of containers utilized. One embodiment of the seismic source system uses standard sized CSC approved ISO containers in a plurality of configurations. Standard sized containers are typically 20 or 40 feet (here and in the subsequent paragraphs 1 feet/foot = 0.305 m) long and 8 feet wide, and may be 8 feet, 6 inches (here and in the subsequent paragraphs 1 inch = 0.025 m) tall for standard height containers to 9 feet, 6 inches tall for high-cube containers. Each container preferably has a floor, roof, and one or more sidewalls, with various portions removed to facilitate the operational task within each container as needed, or to allow service personnel access to the container. In one embodiment (such as for the source handling system), multiple sidewalls of the containers may be removed. A container may include additional frame supports to the floor and/or sides, but would be CSC approved ISO containers.

No other commercial system utilizes such an integrated, modular, and containerized approach for a seismic source system as disclosed herein. Such a fully containerized system requires significant design considerations of all aspects of the seismic source system. Each separate aspect/component of the system depends upon and is integrated with the other aspects/components of the system. For example, the modular design itself affects how the source arrays are deployed and retrieved from the back deck of a vessel, and how they may be stored, serviced, and handled on the vessel. A fully modular and/or containerized system requires a comprehensive and integrated seismic source system that is specifically configured to be transported, stored, and operated out of a plurality of standardized shipping containers. In some embodiments, the modular source system can be combined with a node deployment or recovery operation / system on the same vessel by utilizing same or similar container footprints such that a node deployment or retrieval or storage system may be located on a substantially first level and a seismic source system may be located on a substantially second or third level, or vice versa.

### SYSTEM AND OPERATION

In one embodiment, disclosed is a modular source system used for ocean bottom seismic data acquisition seismic surveys. The modular source system may be installed on board a platform supply vessel, such as any vessel of opportunity. In one embodiment, most, all, or substantially all of the system is transported in ISO sized containers to the vessel and operated within such containers on the vessel.

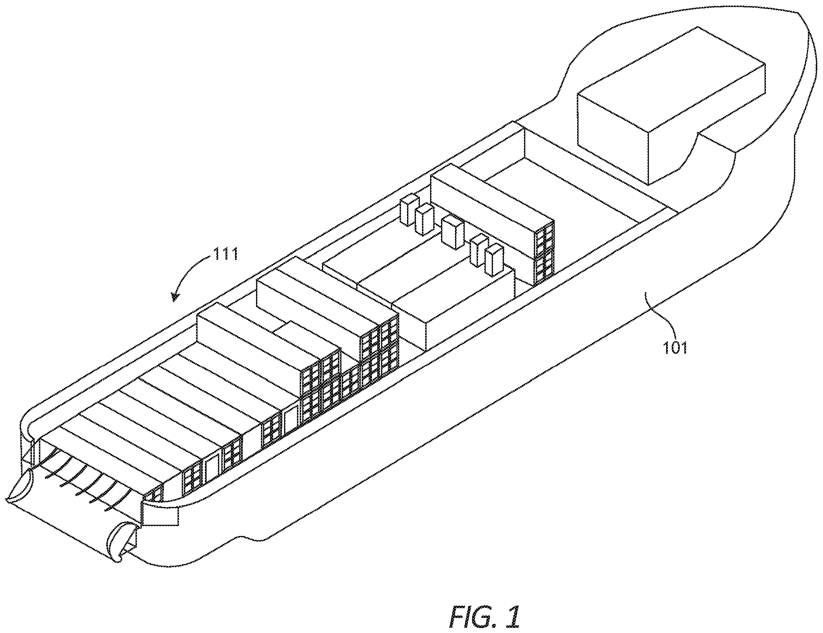

FIG. 1 illustrates one embodiment of seismic source system 111 on marine vessel 101. Marine vessel 101 may be any vessel of opportunity. In one embodiment, seismic source system 111 may comprise approximately 22 containers on the back deck of the marine vessel, and may be substantially located near the rear of the vessel. More or less containers are possible based on the specific design of the source system and survey requirements. The individual components of the seismic source system are discussed in greater detail in subsequent figures. The seismic source system may comprise multiple layers of containers, such as up to two, three, or more levels of containers. The footprint of the seismic source system may be approximately 13 meters wide by 50 meters long. Minimum clear cargo deck dimensions for the vessel may be approximately 15 meters wide by 55 meters long to allow for circulation and movement around the back deck of the vessel for the seismic source system. Of course, other arrangements of the containers and source system are possible based on vessel limitations and overall survey requirements. For example, the seismic source array deployment and recovery may take place over a stern slipway (described in detail later) that can be transported on top of or within one of the shipping containers.

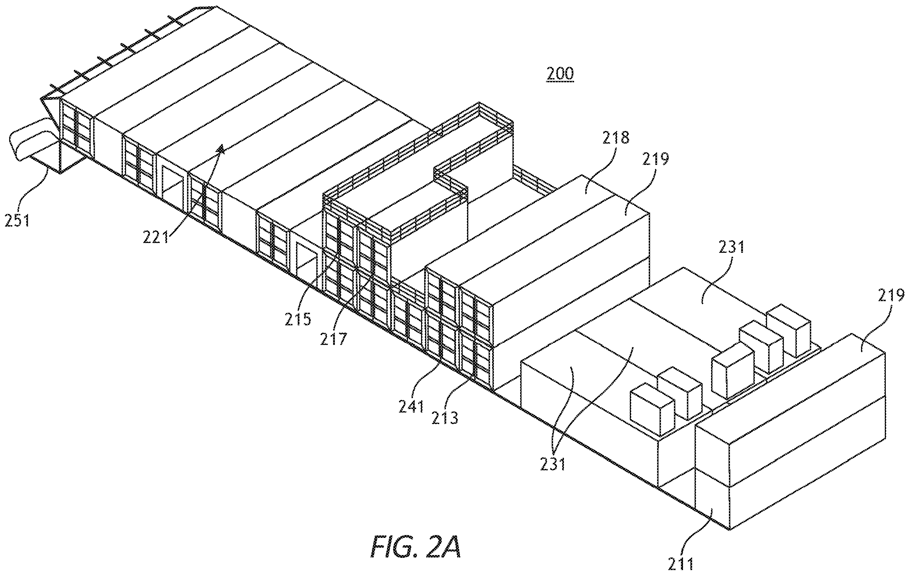

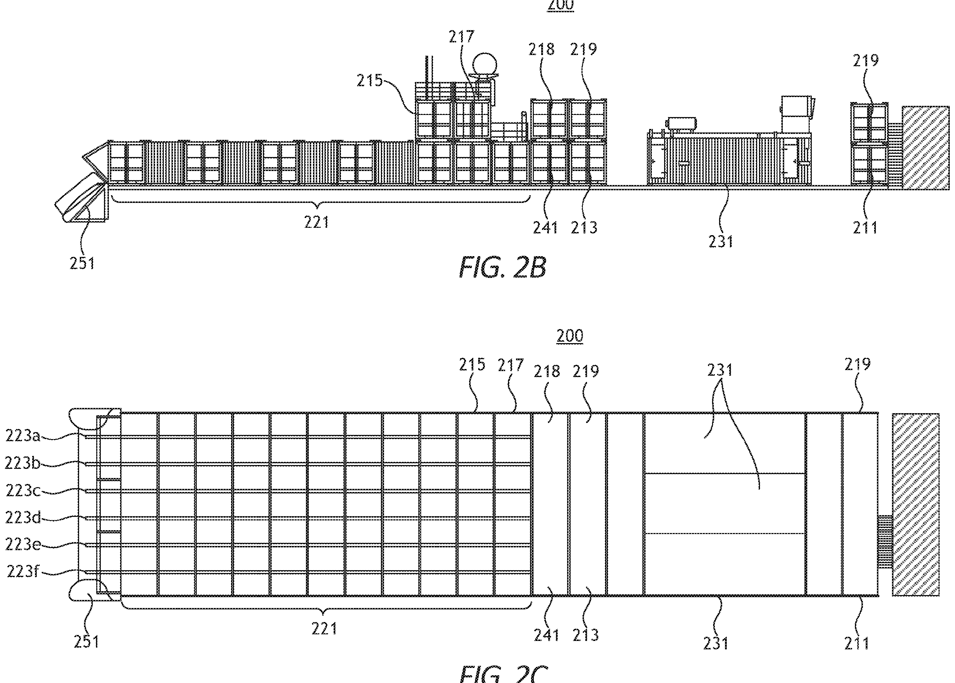

FIGs. 2A-2C illustrate one embodiment of a seismic source system 200 that can be placed on a vessel (not shown) from a perspective, side, and top view, respectively. This system is substantially similar to the system 111 illustrated in FIG. 1. In one embodiment, seismic source system 200 may comprise approximately 22 containers on the back deck of the marine vessel. More or less containers are possible based on the specific design of the source system and survey requirements. In one embodiment, for illustration purposes only, the 22 containers may include one 20-foot container for IT (*see, e.g.,* container 217), thirteen 40-foot high cube (HC) containers for the source handing system (*see, e.g.,* containers 213, 221, 241), five 40-foot containers for storage, office, and workshop containers (*see, e.g.,* containers 211, 215, 218, 219), and three oversized compressor containers (*see, e.g.,* containers 231). Of course, variations of the number, sizes, and types of containers depends on the vessel, seismic survey, and source system requirements. For example, in a "short" configuration, one or more of the containers of the source handling system may be removed, which reduces the overall footprint of the system and which may be useful for particular marine vessels. In some embodiments, containers 241 and 213 may not be considered part of source handling system containers 221, in which case there may be ten or eleven source handling containers 221. FIG. 2C illustrates first and second levels of containers in approximately the same X, Y position, such that second level of containers 215, 217, 218, and 219 are identified at the same position as some of the first level of containers 241, 213, as more clearly illustrated in FIG. 2B. In one embodiment, all of the shipping containers are arranged transversely on the back deck of the vessel. In another embodiment, substantially all of the containers are arranged transversely on the back deck of the vessel and one or more are arranged longitudinally, such as the compressor containers.

In one embodiment, the individual components / containers of the modular source system 200 may be coupled together and/or interface with the marine vessel 101 through a single system hub container 211, where any necessary fuel piping, lube oil piping, oily water piping, sea water piping, and electrical cables may be connected. The equipment installed in system hub container 211 may dispatch fluids and electricity to the relevant containers and equipment on the vessel. The system hub container is designed to connect the different energies (electricity, fuel, sea water, etc.) from the platform supply vessel (e.g., marine vessel 101) to the modular source system. The use of a single container for all mechanical interconnectivity between the marine vessel and the modular source system significantly increases the installation and removal of the modular source system to a marine vessel, which increases the overall efficiency and decreases the installation/deployment cost. In one embodiment, container 211 may be arranged in a plurality of functional sections: one area of the container (*e.g.,* starboard side) may be used for electronic equipment, one area of the container (*e.g.,* in the middle) may be used for a control room or other supervision system, and one area of the container (*e.g*., port side) may be used for a fuel distribution and sea water pump system. Container 211 may be located at various positions within the modular source system 200.

In one embodiment, modular source system 200 may comprise a plurality of compressor containers 231 (such as three) which holds a plurality of (such as three) diesel compressors and relevant exhausts and vents. The compressors are designed and/or configured for the particular size and operation of the source arrays and corresponding guns of the source array system. A larger number (or size) of array guns requires more, larger, and/or stronger compressors and associated containers. The compressor containers may be standardized 40-foot-high-cube (or similar) containers or specially designed oversized containers. For example, in one embodiment, each of the compressor containers may be specially designed (*e.g*., not a ISO standard container) and weigh more than 25 tons and requires specific transportation to the vessel 101.

In one embodiment, modular source system 200 may comprise a high-pressure air and hydraulic power unit (HPA/HPU) container 213. This may be part of and/or coupled to the source handling system. The HPA/HPU container 213 may host the hydraulic power unit for all source handling actuators and the high-pressure air management system (air panel and relief valves) for source system 200. In one embodiment, container 213 may also contain a centralized marine air conditioning unit, which may be configured with a sea water condenser, compressor, evaporator, and chilled water storage tank and be coupled to each container where air conditioning is needed. Container 213 may be located at various positions within the modular source system 200.

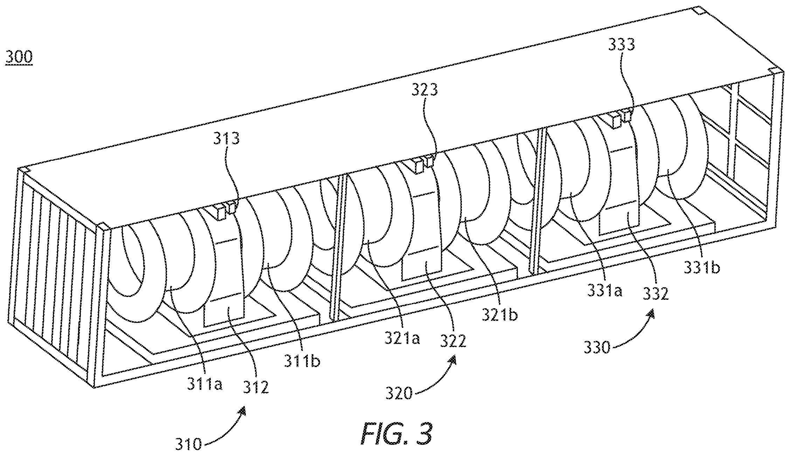

In one embodiment, modular source system 200 may comprise one or more umbilical winch containers 241. This may be part of and/or coupled to the source handling system. In one embodiment, container 241 may be located adjacent to the plurality of containers forming source handling system 221. One such container is shown in more detail in FIG. 3, which illustrates one embodiment of umbilical winch system 300 within container 241. The container may be configured to hold a plurality of winch systems, such as three winch systems, each with double winches. The winch systems are designed to deploy and retrieve the seismic source system from the marine vessel, and in particular, are designed to deploy and retrieve the seismic source arrays (e.g., gun arrays) to and from the adjacent source handling system containers 221, and more particularly the umbilicals connected to the gun arrays. As is known in the art, an umbilical cable may include any necessary air and electrical lines for the source array system. In one embodiment, the winch container is configured to deploy and retrieve six gun umbilicals, although more or less are possible.

As shown in FIG. 3, in one embodiment umbilical winch system 300 may comprise first winch system 310, second winch system 320, and third winch system 330, all of which may be located within container 241. Each winch system 310, 320, 330 may comprise or be coupled to a handling winch 313, 323, and 333, respectively, as well as double umbilical winches 312, 322, and 332, each of which is coupled to a pair of umbilical reels 311a / 311b, 321a / 321b, and 331a / 331b, respectively. The reels are configured to store the umbilicals, which may include approximately 300 meters of umbilical cable on each reel. In one embodiment, there are six reels, each reel for one of the six seismic source lines. Each winch 312, 322, 332 is coupled to a pair of reels and is configured to individually and/or selectively rotate the reels to deploy and retrieve the umbilical cables from each reel. Each reel is configured with a pair of motors, with each motor coupled to one of the reels. The winches may be coupled to a tension monitoring system to help retrieve and/or deploy the umbilical cables from the reels. Handling winches 313, 323, 333 may be used as handling winches for the source array as necessary, such as to help pull the source array during retrieval operations or to control the exit of the source array during deployment operations. As is known in the art, generally one source array line is deployed into and/or retrieved from the water at a time to avoid entanglement with other source array lines.

In one embodiment, one or more of winch system 310, 320, 300 may be removable / detachable from the winch system container. This is important because standardized containers have maximum weight requirements for transportation (such as 25 tons each), and having three winch systems in a single container may exceed the maximum weight limits for transportation (but not operation). Thus, one or more of the winch systems needs to be easily removed for transportation purposes from container 241 and placed in another container during transportation. In one embodiment, each winch may be mounted on a stand frame that is easily removed and/or detached from (and likewise attached to) the container, such as by a forklift. In one embodiment, the winch container is built on a 40-foot high-cube container frame with opened longitudinal sides and configurable in two different modes. In one embodiment, one of the winches always remains in the container (such as middle winch system 320) and the other two winches (such as winch systems 310 and 330) may be removed for storage and/or transportation purposes, which reduces the weight of the container below any maximum weight limits for transportation purposes. For example, in a first "use" mode, all of the double winch systems may be fastened in the container with appropriate brace chutes and mesh panels for safety. In a second "transport" mode, two of the double winches may be removed (such as winch systems 310 and 330) and stored in other containers for shipping. The container may be designed to withstand any brake force of the installed winches.

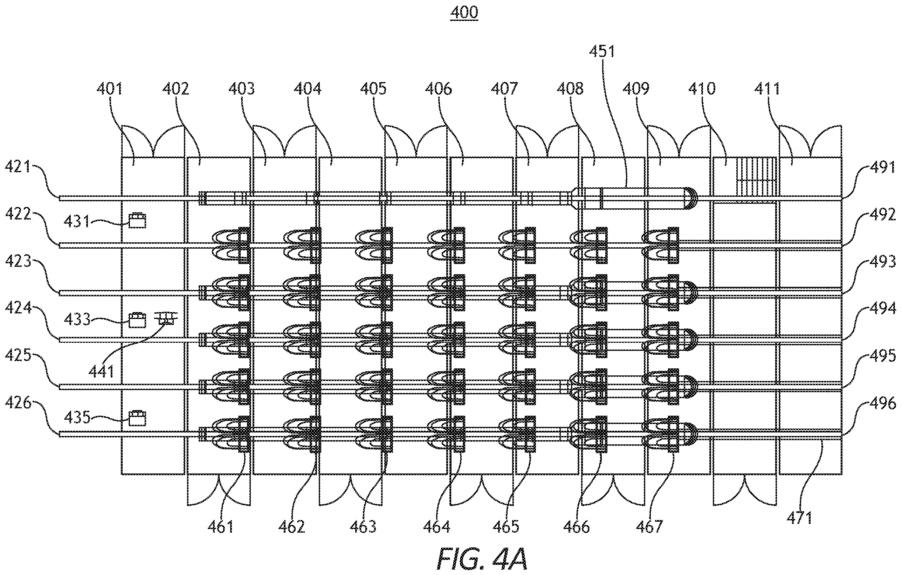

Referring now back to FIGs. 2A-2C, in one embodiment, modular source system 200 may comprise a plurality of containers that form a source handling system 221. In one embodiment, source handling system 221 stores all of the source arrays used by the seismic source system in a set of eleven 40-foot high-cube containers, which connect slipway 251 to umbilical winch container 241. These containers are installed transverse on the back deck of the vessel instead of longitudinally. In other words, the longitudinal sides of each container are adjacent to the longitudinal sides of another container within the source handling system 221. This traverse container installation provides a significant advantage, as it allows greater operating room between each of the source arrays even within a containerized system. As is known in the art, a seismic source array may comprise a plurality of seismic sub-arrays, with each comprising a gun float, a plurality of guns, and cable/string/rope between the air guns. As shown in FIG. 2C, each of the six seismic sub-arrays /lines is deployed and retrieved across a gun rail 223a-f, respectively, that is located within and across the plurality of transversely positioned containers 221 (which is more described in relation to FIGs. 4A-4B).

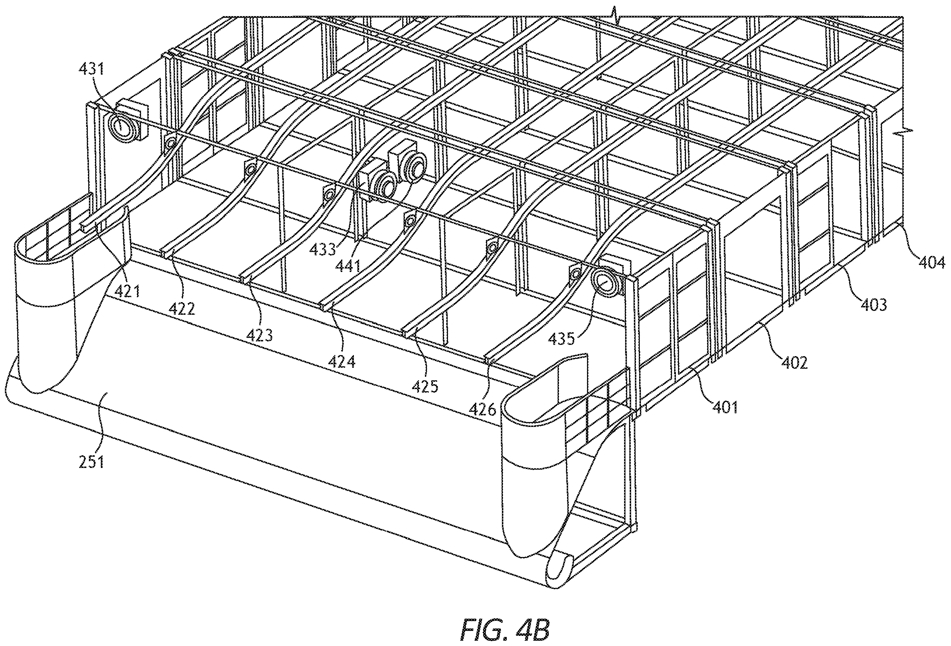

One embodiment of source handling system 400, which may be substantially similar to source handling system 221, is shown in more detail in FIGs. 4A and 4B. FIG. 4A shows source handling system 400 from a top perspective, while FIG. 4B shows a rear perspective view of system 400. In one embodiment, as shown in FIG. 4A, source handling system 400 may comprise eleven containers 401-411 configured to route six separate source arrays 491-496 through all of the containers of source handling system 400. In one embodiment, the path of travel of the source arrays is transverse or through the sides of each of the adjacent containers 401-411. In one embodiment, container 401 is located near the rear portion of the marine vessel adjacent slipway 251 and container 411 is located adjacent winch container 241. Thus, in deployment operation, the seismic source lines are routed from winch container 241 to container 411, and then eventually to container 401 and over slipway 251. In some embodiments, more or less source arrays / umbilicals may be routed through the containers, and in other embodiments more or less containers may be utilized. For example, container 410 may contain stairs and is used in one configuration to provide extra operator working area around the source area; in some embodiments, containers 410 and/or 411 may be eliminated. As seen from FIG. 4A, each container may have container doors that open from one of the container ends to allow access into the container.

As is known in the art, a seismic source array may comprise a plurality of seismic sub-arrays and are often called gun arrays because they "shoot" seismic signals into a body of water. In one embodiment, each seismic source array comprises a gun float, a plurality of guns, and cable/string/rope between the air guns. For example, as shown in FIG. 4A, an exemplary source array may comprise gun float 451, a plurality of gun clusters 461-467 (such as seven gun clusters, more or less are possible), and umbilical 471 which is connected to a reel in the winch container (not shown in FIG. 4A). In one embodiment, as is known in the art, each gun cluster comprises a plurality of guns connected by a cluster bar (not shown). Thus, each source array line may comprise approximately 14 air guns. For clarity purposes in FIG. 4A, source line 491 only displays float 451 (with portions of float 451 being located in each of the containers prior to and/or after deployment) and source line 492 only displays the seven gun clusters without the associated float. Source lines 493-496 illustrate the coupled float, gun clusters, and umbilical together. During deployment operations, these components of the source array are deployed in the water and only the umbilical actively passes through the containers. Before and after deployment while on the back deck of the vessel, the source array components may be arranged in the illustrated position of FIG. 4A.

In one embodiment as the source array travels through the plurality of containers 401-411, each gun cluster hangs down from the float (by a hanger, rope, chain, etc.) and travels on the container floors (and between the adjacent containers) by a plurality of rollers located on the gun cluster and/or cluster bar. The float may be connected to a trolley with rollers that moves along the gun rails 421-426. Thus, movement of the float along the gun rails helps move the connected gun clusters through the containers. In one embodiment, as the containers 401-411 are assembled on the back deck of the vessel and/or prior to operation of the source arrays, a container joint interface (not shown) is installed between each of the adjacent containers that makes the interface between the containers substantially flush and allows and/or facilitates travel of the gun cluster rollers between the different containers.

In one embodiment, some or all of the sides of these containers 401-411 are removed to allow the source arrays to freely travel between the different containers. In one embodiment, the entire side is removed and/or is substantially opened during assembly of the containerized system on the back deck of the vessel. For example, each of the containers may have open sides and is configurable in two different modes. For example, in a first "use" mode, all of the sides of the containers are removed or dismantled to create one large hangar or open section, such that all of the containers are substantially or essentially open on the longitudinal sides of the containers. In a second "transport" mode, the sides of the containers may be closed to safely store and ship all of the system's components. In another embodiment, only a hole or entry point exists in the container wall for each source array to pass through the wall.

In one embodiment, source handling system 400 may be equipped with gun rails and handling winches to deploy and recover the seismic source arrays. In one embodiment, container 401 may comprise various handling equipment to facilitate movement of the source arrays from the source handling system 400 to slipway 251. In one embodiment, container 401 comprises spread rope winch 441 and three auxiliary winches 431, 433, 435. As is known in the art, spread rope winch 441 is configured to store, deploy, and recover a separation control rope (not shown) that is coupled to each of the seismic source arrays and is used to decrease and/or increase the spread of the source arrays in the water. The auxiliary winches are configured to help pull out the source arrays off the vessel or from the water into the vessel. A plurality of pulleys or similar driving devices may be added to the aft area of the source handling containers to lift the source array if necessary during retrieval or deployment. Once these source array systems are deployed in the water, generally the position of the source array systems are controlled by the connected umbilical cables and umbilical winches.

As mentioned above, six source arrays 491-496 may extend through substantially all of the containers 401-411. In one embodiment, handling "gun" rails 421-426 are configured to handle the source arrays as they pass from the umbilical winches to the slipway. The gun rails are also illustrated in FIG. 4B. The gun rails are essentially metal slides or guides that facilitate travel of the seismic source arrays and prevent or limited unwanted movement and potential damage to the cable. In one embodiment, the source arrays are coupled to a plurality of trolleys that roll along the gun rails between the containers. In one embodiment, the gun rails are transported in one or more containers and during installation on the vessel they are linked together between the different containers. In some instances, two or more sections of a gun rail are hooked or linked together over a plurality of containers to form the overall gun rail system for the source array. Thus, a single gun rail section (which may be between 5-10 meters long or more) may extend across two, three, or four or more transversely placed containers, and may be coupled to adjacent rail sections to form the entire gun rail length across the ten or eleven containers. It is important to maintain a space on each side of the gun rails as the source arrays that travel along the rails may have a total width of approximately one meter and will swing side to side when travelling. Maintaining walking and escape routes is essential to an efficient and safe operation. Alternative container/module arrangements may arrange the source modules longitudinally instead of transverse, but this then causes steel restrictions to limit the working space. For example, in one embodiment, the clear opening of a standard shipping container is about 2.2 meters, which restricts the operators as additional steel guides are needed to prevent umbilical damage, further reducing effective space. In one embodiment, the sub array spacing of 1.8 meters of the disclosed embodiment shown in FIGs. 4A and 4B provides approximately a one meter walking space between each sub array as compared to 0.2 meters if a longitudinal module was used. Thus, the use of transversely positioned containers provides significantly increased operating room for the source array umbilicals.

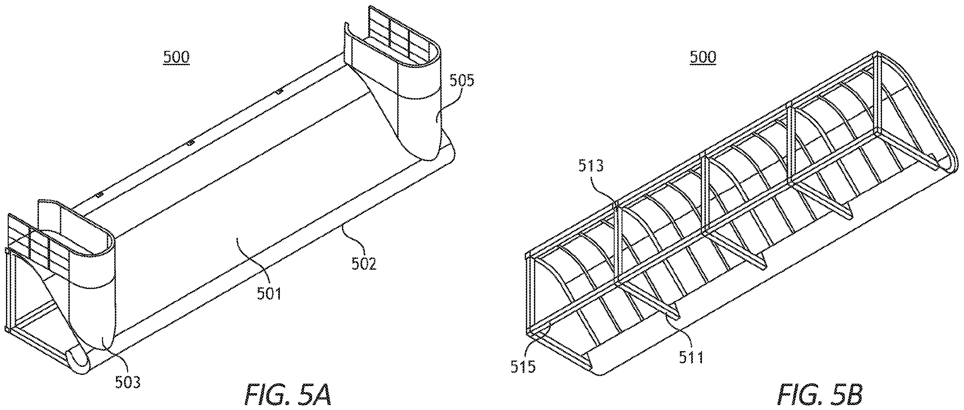

Referring now back to FIGs. 2A - 2C, in one embodiment, modular source system 200 may comprise slipway 251. Slipway 251 is a structure (such as a steel structure) located on the transom of the vessel and configured to provide a smooth surface for the source arrays to come in and out of the vessel during deployment and retrieval operations. One embodiment of the slipway 251 is shown as slipway system 500 in FIGs. 5A and 5B. As opposed to prior art slipways, which are typically directed to a permanently installed slipway to the vessel, disclosed slipway system 500 is easily detachable and/or removable from the marine vessel. The disclosed system allows a variety of vessels to be suitable for a slipway (and source handling system) and decreases the installation time (and cost) for attaching a slipway to a vessel. Further, the disclosed slipway design facilitates easy transportation and installation, as the slipway is configured to fit within or on top of a standard 40-foot shipping container. Thus, the slipway can be easily transported and quickly installed on a wide variety of vessels. In one embodiment, slipway system 500 comprises slipway 501 with a radius of curvature that approximates the minimum dynamic bend radius of standard umbilical cables and provides a smooth slipway for the umbilical cables to travel to and from the marine vessel to a body of water. Portions of slipway 501 may be stainless steel, such as the plating used on the curved surface. Slipway system 500 may also include grating platforms, removable bulwarks, and/or viewing sections 503, 505 on either side of slipway 501. As shown in FIG. 5B, the support structure of the slipway may comprise one or more horizontal support structures 515 that extends substantially from one side of the vessel to another side of the vessel (or from one side of the slipway system to the other side), and a plurality of horizontal and vertical support structures 511, 513, respectively, that are coupled to horizontal support structure 515 across its width. In one embodiment, a substantially flat surface of slipway 501 is attached to various portions of the support structures 511, 513, such as by welding or other fastening mechanisms. The edge 502 of the slipway may be substantially rounded to prevent damage to the umbilical seismic cables.

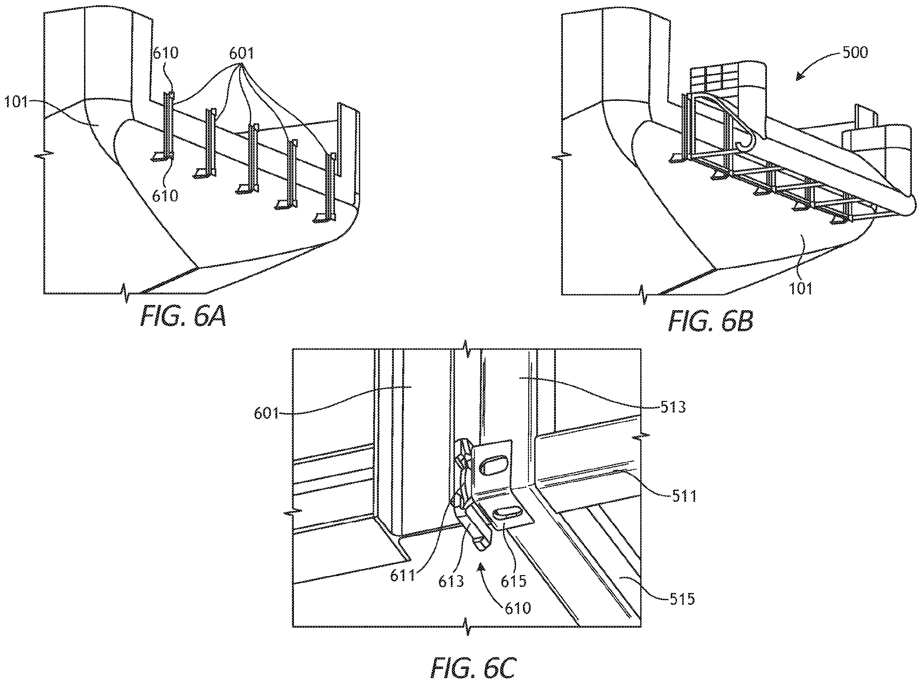

FIGs. 6A, 6B, and 6C illustrate one embodiment on how slipway system 500 can be detachable and/or removably coupled to the marine vessel. Such a removable slipway system can be easily transported to and from the marine vessel, and installed on a wide variety of vessels at a significantly decreased cost and installation time. In one embodiment, slipway system 500 is removably attached to the ship transom by welded interface parts that are coupled to twist locks on the slipway. For example, as shown in FIG. 6A, a plurality of slipway interface sections 601 may each be coupled to a tail end of surface vessel 101 across the width of the vessel. In one embodiment, approximately four or fix slipway sections 601 are welded to the transom of the ship vessel. Each slipway interface section may comprise a vertical section and a horizontal section, and a plurality of slipway connections 610 (such as standardized ISO connections) may be located on each vertical section. In one embodiment, as shown in FIG. 6B, each slipway interface section 601 is coupled to a support structure of slipway system 500 by any number of fastening mechanisms. One particular coupling is shown in an enlarged view in FIG. 6C, which shows a vertical segment of slipway interface 601 coupled to the support structure (such as support structure 513) of slipway 501 by a standardized ISO connection twist lock mechanism 610. In one embodiment, twist lock mechanism 610 may include male lock / protrusion 611 (located on vertical interface section 601) and female lock / receptacle 613, which may be coupled to the slipway support bracket via support brackets/flanges 615. In one embodiment, female lock 613 is configured to rotate and/or slide around male lock 611. For example, for attachment, the slipway may be positioned adjacent interface connections 601, and in particular the female portion of the ISO connection 610 (located on the slipway) may be positioned proximate or adjacent to the male portion of ISO connection 610 (located on the interface section 601). A portion of the twistlock ISO connection 610 may be rotated (such as by 30 degrees) until a secure connection is made between the male and female portions. For removal of the slipway, the locks may be twisted in a reverse manner to unlock or detach the male and female portions of the ISO twistlock connection and the slipway removed from the interface connections 601 and vessel 101.

Referring now back to FIG. 2A, in one embodiment, modular source system 200 may comprise a plurality of miscellaneous containers, such as office container 215, navigation and IT container 217, workshop container 218, and one or more storage containers 219. More or less of these containers may be needed based on the particular arrangement of the source system 200 and survey requirements.

In operation, the various winches of the source system may be remote-controlled with a portable radio emitter. In one embodiment, source handling system 221 is equipped with seven auxiliary winches as noted above: three pulling winches 313, 323, 333 in the umbilical winch container 241, three handling winches 431, 433, 435 in source handling container 401, and one spread rope winch 441 in source handling container 401. The pulling winches may be used to pull the source float during retrieval operations or to control the exit of the float during deployment operations. The handling winches may be used to help pull out the source arrays off the vessel or otherwise control or handle the source arrays during deployment or retrieval from the vessel. Further, a plurality of pulleys or similar driving devices may be added to the aft area of the source handling containers to lift the source array if necessary during retrieval. The spread rope winch 441 may be located in the middle of the aft source handling container and be used to store, deploy, and recover a separation control rope attached in the center of the spread rope, which is used to control the degree of separation of the different source array lines as is known in the art. A removable pulley may be located underneath at deck level to lower the traction point of the spread rope.

### ASSEMBLY

In one embodiment, the modules / containers of the portable source seismic system 200 are installed on a steel or wooden deck frame with standard shipping container fasteners, such as twist-locks. The frame is intended to spread the cargo load on the deck and may be fabricated with H-beams and secured on the back deck of the vessel 101 by pairs of gussets welded on the crossmembers of the vessel's deck or using available sea fastening parts.

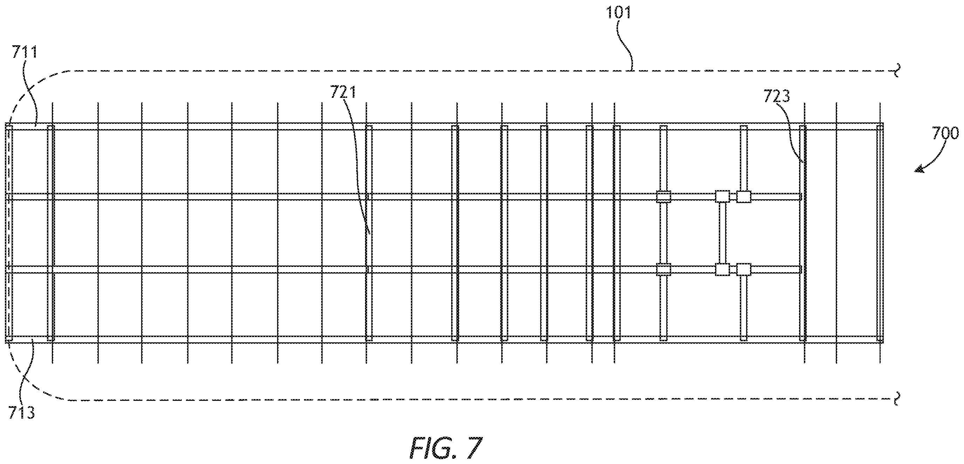

For example, FIG. 7 illustrates one embodiment of an attachment grid structure for a seismic source system to a marine vessel 101. More particularly, FIG. 7 shows an attachment grid system 700 on the back deck of the marine vessel (dotted lines show an exemplary outline of the back deck of the marine vessel 101) that is configured to fasten the arrangement of containers illustrated in FIGs. 2A-2C to the back deck of the marine vessel 101. In one embodiment, containers are not directly installed to the back deck of the vessel but are instead installed to a grid or foundation system 700 that is separately installed to the surface vessel. Thus, the foundation frame system 700 is an interface part between the vessel and the modular source system 200, and may have to be adapted to the particularities of the hired vessel. In one embodiment, the foundation frame system comprises a plurality of horizontal longitudinal H-bars 711, 713 running the length of the cargo deck of the vessel. Longitudinal bars 711, 713 may be welded on the cargo deck's transverse T-bars as appropriate. Additional longitudinal bars may be required for some situations. In some embodiments, the attachment grid system may also include a plurality of H-bar sections 721, 723, each of which may be welded transversally between the longitudinal bars to prevent exceeding any cargo deck strength limitations and help prevent unnecessary twisting or rotations of the containers. Additional longitudinal and transverse H-bars may be welded to the back deck as necessary. In one embodiment, the first level of containers in container system 200 may be structurally interfaced with the cargo deck of the vessel by H-bars sections 711, 713 in the transverse direction by means of twist-locks welded on the H-bars 711, 713, as is known in the art. The top row of containers in container system 200 may be installed in the transverse direction as well as on top of the bottom row of containers by means of standard ISO interconnections. By being on a foundation frame, the modular containerized source system 200 never rests directly on the back deck of the vessel, which allows water to flow freely over the back deck of the vessel between the back deck surface and the bottom of the containers. In one embodiment, the foundation frame system 700 is a standard and/or universal design such that it does not have to be redesigned and/or relearned for each separately used and/or installed vessel. In other words, a universal frame system 700 can be designed such that it can be quickly, efficiently, and repeatedly used on a wide variety of marine vessels without having to redesign and/or relearn a different foundation system.

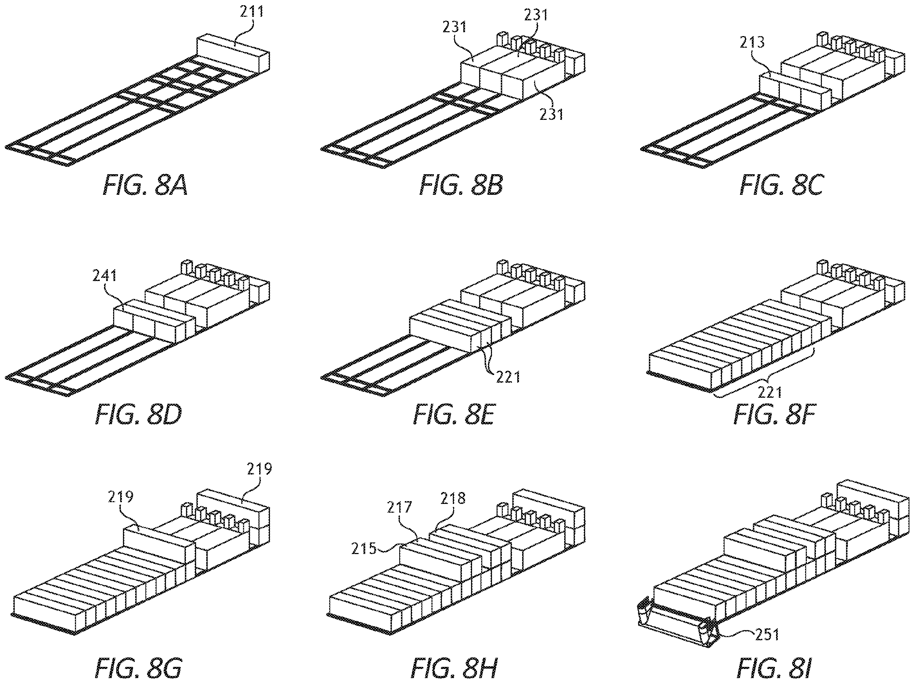

FIGs. 8A-8I illustrates one embodiment of a method for attaching a seismic source system to a marine vessel. For simplicity, only the newly added containers in each figure are illustrated. In one embodiment, the seismic source system attached is substantially similar to system 200 illustrated in FIGs. 2A-2C and comprises a plurality of containers. In one embodiment, a steel foundation frame (such as foundation structure 700) is assembled to the back deck of the marine vessel as shown in FIGs. 7 and 8A. The containers of the disclosed seismic source system may be fastened to the foundation structure 700 in a variety of steps and different orders. In one embodiment, as illustrated in FIGs. 8A-8I, the method may comprise the following steps: hub system container 211 may be first installed (FIG. 8A), followed by the compressor containers 231 (FIG. 8B), the HPA/HPU container 213 (FIG. 8C), the umbilical container 241 (FIG. 8D), the plurality of source handling containers 221 (FIGs. 8E, 8F), the plurality of storage containers 219 (FIG. 8G), the plurality of miscellaneous containers 215, 217, 218 (FIG. 8H), and slipway 251 (FIG. 8I). All interface piping and cabling between the containers are then installed. Of course, other methods of container installation are possible, and any particular arrangement is not critical for this present disclosure. In some embodiments, any necessary slipway interface points (see FIGs. 6A-6C) may be installed on the vessel transom prior to, during, or after attaching the containers to the back deck, and in some embodiments some or all of the stern bulwark may be removed before, during, or after container installation. In other embodiments, slipway 251 may be installed before some or all of the containers are placed on the attachment grid.

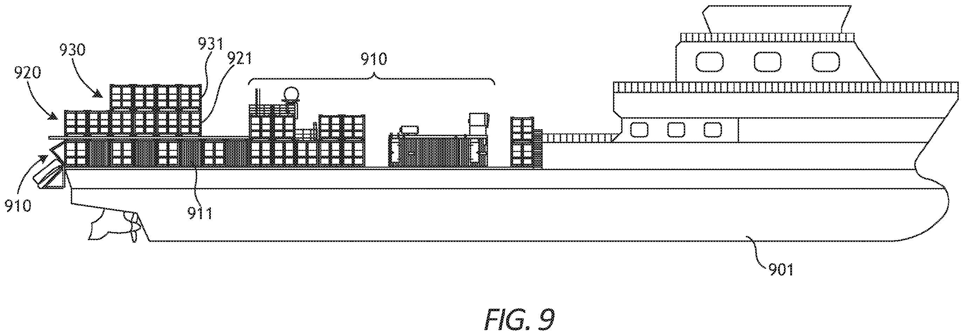

FIG. 9 illustrates one embodiment of a modular seismic source array system with a modular node deployment and/or retrieval system on the same marine vessel. In some embodiments, a particular survey may allow for the combining of modular sources on a single vessel. For example, a single vessel may combine both a source array containerized system with a node deployment or recovery system. This can be achieved by stacking of modules / containers with equivalent footprint or with the addition of a Mezzanine deck on-top of the modular source. For example, a first modular system 910 may be located substantially on a first level of the back deck of marine vessel 901. First modular system 910 may be seismic source system 200, and such a system may be installed on an attachment grid utilizing the procedure described in relation to FIGs. 8 A- 81. A second modular containerized system 920 may be installed on a second or higher level on the first modular system 910 using known attachment techniques. For example, modular system 920 may comprise a node storage and handling system and node deployment/recovery system, such as one described in U.S. Patent Nos. 9,784,873 and 9,459,366. Such a second modular system may be installed on the top of the first modular system by techniques described in this application and known to those of skill in the art by at least standardized ISO connections. In another embodiment, a second modular system containerized system 930 may be installed on top of the first and/or second modular system 910, 920. In some embodiments, each of the first, second, or third modular systems are mechanically (e.g. , electrical and fluid connections, etc.) to the marine vessel by a single HUB container (such as hub system container 211). In one embodiment, a first container 911 of the first modular system supports a second container 921 of the first or second modular system which may support a third container 931 of the second or third modular system. In some embodiments, a slipway or other device may be installed to the vessel separate from the containers, such as to the transom of the vessel. For some surveys, this combined modular approach costs significantly less than utilizing two separate vessels equipped with each of the separate modular systems.

All of the methods disclosed and claimed herein can be made and executed without undue experimentation in light of the present disclosure. While the apparatus and methods of this invention have been described in terms of preferred embodiments, it will be apparent to those of skill in the art that variations may be applied to the methods and in the steps or in the sequence of steps of the method described herein without departing from the scope of the appended claims. In addition, modifications may be made to the disclosed apparatus and components may be eliminated or substituted for the components described herein where the same or similar results would be achieved.

Many other variations in the seismic source system are within the scope of the invention. For example, all of the containers may be standard sized shipping containers or just substantially all of the containers (but for the compressor containers). In another embodiment, any type of source arrays may be utilized with the disclosed modularized source system. In still other embodiments, multiple modular systems (e.g. , a seismic source system, a node storage system, a node deployment system, a node retrieval system) may be interconnected and positioned on the back deck of a marine vessel in a plurality of containers. In still other embodiments, the disclosed seismic system may be used with a wide variety of nodes, such as seismic streamers, ocean bottom nodes, nodes deployed in the sea between the seabed and the ocean surface, and nodes deployed near the ocean surface, as well as nodes deployed via cable, ROV, or autonomous vehicles. It is emphasized that the foregoing embodiments are only examples of the very many different structural and material configurations that are possible within the scope of the present invention.

Although the invention(s) is/are described herein with reference to specific embodiments, various modifications and changes can be made without departing from the scope of the present invention(s), as presently set forth in the claims below. Accordingly, the specification and figures are to be regarded in an illustrative rather than a restrictive sense, and all such modifications are intended to be included within the scope of the present invention(s). Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A containerized seismic source system (111, 200, 400, 910), comprising:
a plurality of shipping containers (211, 213, 215, 217-219, 221, 231, 241, 401-411) located on a back deck of a marine vessel (101, 901); and
a seismic source handling system comprising a plurality of source handling rails (223a-f, 300, 421-426) located within a first group (221, 401-409) of the plurality of shipping containers (211, 213, 215, 217-219, 221, 231, 241, 401-411), wherein the seismic source handling system is configured to deploy and retrieve a plurality of seismic source arrays (491-496) from the back deck of the marine vessel to a body of water across each of the first group of the plurality of shipping containers (211, 213, 215, 217-219, 221, 231, 241, 401-411); wherein
the first group of the plurality of containers (211, 213, 215, 217-219, 221, 231, 241, 401-411) is arranged transverse on the back deck of the marine vessel (101, 901); and
the plurality of source handling rails (223a-f, 421-426) is located in each of the first group of the plurality of containers (211, 213, 215, 217-219, 221, 231, 241, 401-411).

2. The system (111, 200, 400, 910) of claim 1, further comprising a detachable slipway (251, 501) coupled to a back portion of the marine vessel (101, 901) by a plurality of slipway interfaces (601) separately installed to the marine vessel (101, 901).

3. The system (111, 200, 400, 910) of claim 1, further comprising a detachable slipway (251, 501) coupled to a back portion of the marine vessel (101, 901) by a plurality of ISO connections (610).

4. The system (111, 200, 400, 910) of claim 1, further comprising a detachable slipway (251, 501) coupled to a back portion of the marine vessel (101, 901), wherein the slipway (251, 501) is configured to be transported to the marine vessel (101, 901) via a shipping container.

5. The system (111, 200, 400, 910) of claim 1, wherein the plurality of shipping containers (211, 213, 215, 217-219, 221, 231, 241, 401-411) is fastened to the back deck of the marine vessel (101, 901) by a container grid attachment frame (700), wherein the frame (700) comprises at least a plurality of longitudinal bars (711, 713).

6. The system (111, 200, 400, 910) of claim 1, wherein each of the first group (221, 401-409) of the plurality of containers (211, 213, 215, 217-219, 221, 231, 241, 401-411) comprises open sides or removable sidewalls.

7. The system (111, 200, 400, 910) of claim 1, wherein the plurality of shipping containers (211, 213, 215, 217-219, 221, 231, 241, 401-411) comprises a systems hub container (211) that is configured to couple all electrical and fluid connections from the marine vessel (101, 901) to the containerized source system (111, 200, 400, 910).

8. The system (910) of claim 1, further comprising an ocean bottom node storage system (920) located within a second plurality of shipping containers located at least partially on top of the first group (221, 401-409) of the plurality of shipping containers (211, 213, 215, 217-219, 221, 231, 241, 401-411).

9. The system (910) of claim 8, further comprising an ocean bottom node deployment or recovery system (930) located within a third plurality of shipping containers located at least partially on top of the first group (221, 401-409) of the plurality of shipping containers (211, 213, 215, 217-219, 221, 231, 241, 401-411).

10. The system (910) of claim 1, comprising:
an ocean bottom node storage system (920) located within a second plurality of shipping containers located on the back deck of the marine vessel (101, 901); and
an ocean bottom node deployment or recovery system (930) located within a third plurality of shipping containers located on the back deck of the marine vessel (101, 901).

11. The system (910) of claim 10, wherein the ocean bottom node storage system is located at least partially on top of the seismic source handling system (223a-f, 300, 421-426), wherein the ocean bottom node deployment or recovery system is located at least partially on top of the seismic source handling system (223a-f, 300, 421-426) or ocean bottom node storage system.

12. A method of deploying a seismic source array (491-496) from a marine vessel (101, 901), comprising:
deploying a plurality of seismic source arrays (491-496) off a back deck of a marine vessel (101, 901) from a plurality of shipping containers (211, 213, 215, 217-219, 221, 231, 241, 401-411); and
deploying each of the plurality of seismic source arrays (491-496) through each of the plurality of shipping containers (211, 213, 215, 217-219, 221, 231, 241, 401-411); wherein
the plurality of containers (211, 213, 215, 217-219, 221, 231, 241, 401-411) is arranged transverse on the back deck of the marine vessel (101, 901); and
a plurality of source handling rails (223a-f, 421-426) is located in each of the first group of the plurality of containers (211, 213, 215, 217-219, 221, 231, 241, 401-411).

13. A method of installation of a modular seismic source array system (111, 200, 400, 910) onto a marine vessel (101, 901), comprising:
attaching a grid attachment frame (700) to a back deck of the marine vessel (101, 901);
coupling a plurality of containers (211, 213, 215, 217-219, 221, 231, 241, 401-411) to the grid attachment frame (700), wherein a seismic source handling system (223a-f, 300, 421-426) is located within at least some of the plurality of containers (211, 213, 215, 217-219, 221, 231, 241, 401-411) and is configured to deploy and retrieve a plurality of seismic source arrays (491-496) from the back deck of the marine vessel (101, 901) to a body of water; and
coupling a detachable slipway (251, 501) to a rear portion of the marine vessel (101, 901) by a plurality of ISO connections (610); wherein
the first group of the plurality of containers (211, 213, 215, 217-219, 221, 231, 241, 401-411) is arranged transverse on the back deck of the marine vessel (101, 901); and
a plurality of source handling rails (223a-f, 421-426) is located in each of the first group of the plurality of containers (211, 213, 215, 217-219, 221, 231, 241, 401-411).

## Patentansprüche

1. Containerisiertes seismisches Quellensystem (111, 200, 400, 910), das Folgendes umfasst:
mehrere Versandcontainer (211, 213, 215, 217-219, 221, 231, 241, 401-411), befindlich auf einem Hinterdeck eines Hochseeschiffs (101, 901); und
ein seismisches Quellenbehandlungssystem, umfassend mehrere Quellenbehandlungsschienen (223a-f, 300, 421-426), befindlich innerhalb einer ersten Gruppe (221, 401-409) der mehreren Versandcontainer (211, 213, 215, 217-219, 221, 231, 241, 401-411), wobei das seismische Quellenbehandlungssystem ausgelegt ist zum Bereitstellen und Bergen von mehreren seismischen Quellenanordnungen (491-496) vom Hinterdeck des Hochseeschiffs in ein bzw. aus einem Gewässer über jeden aus der ersten Gruppe der mehreren Versandcontainer (211, 213, 215, 217-219, 221, 231, 241, 401-411); wobei
die erste Gruppe der mehreren Container (211, 213, 215, 217-219, 221, 231, 241, 401-411) quer auf dem Hinterdeck des Hochseeschiffs (101, 901) angeordnet ist; und
wobei die mehreren Quellenbehandlungsschienen (223a-f, 421-426) in jedem aus der ersten Gruppe der mehreren Container (211, 213, 215, 217-219, 221, 231, 241, 401-411) befindlich sind.

2. System (111, 200, 400, 910) nach Anspruch 1, ferner umfassend eine abnehmbare Gleitbahn (221, 501), gekoppelt mit einem hinteren Teil des Hochseeschiffs (101, 901) über mehrere Gleitbahn-Schnittstellen (601), die separat am Hochseeschiff (101, 901) installiert sind.

3. System (111, 200, 400, 910) nach Anspruch 1, ferner umfassend eine abnehmbare Gleitbahn (251, 501), gekoppelt mit einem hinteren Teil des Hochseeschiffs (101, 901) über mehrere ISO-Verbindungen (610).

4. System (111, 200, 400, 910) nach Anspruch 1, ferner umfassend eine abnehmbare Gleitbahn (251, 501), gekoppelt mit einem hinteren Teil des Hochseeschiffs (101, 901), wobei die Gleitbahn (251, 501) dazu ausgelegt ist, mittels eines Versandcontainers zum Hochseeschiff (101, 901) transportiert zu werden.

5. System (111, 200, 400, 910) nach Anspruch 1, wobei die mehreren Versandcontainer (211, 213, 215, 217-219, 221, 231, 241, 401-411) am Hinterdeck des Hochseeschiffs (101, 901) durch einen Containerrasterbefestigungsrahmen (700) befestigt sind, wobei der Rahmen (700) zumindest mehrere längs verlaufende Balken (711, 713) umfasst.

6. System (111, 200, 400, 910) nach Anspruch 1, wobei jeder aus der ersten Gruppe (221, 401-409) der mehreren Container (211, 213, 215, 217-219, 221, 231, 241, 401-411) offene Seiten oder entfernbare Seitenwände umfasst.

7. System (111, 200, 400, 910) nach Anspruch 1, wobei die mehreren Versandcontainer (211, 213, 215, 217-219, 221, 231, 241, 401-411) einen Systemknotencontainer (211) umfassen, der ausgelegt ist zum Koppeln aller elektrischen und Fluidverbindungen vom Hochseeschiff (101, 901) zum containerisierten Quellensystem (111, 200, 400, 910) .

8. System (910) nach Anspruch 1, ferner umfassend ein Ozeanbodenknotenspeicherungssystem (920), befindlich innerhalb von zweiten mehreren Versandcontainern, befindlich zumindest teilweise oben auf der ersten Gruppe (221, 401-409) der mehreren Versandcontainer (211, 213, 215, 217-219, 221, 231, 241, 401-411).

9. System (910) nach Anspruch 8, ferner umfassend einen Ozeanbodenknoteneinsatz- oder -bergungssystem (930), befindlich innerhalb von dritten mehreren Versandcontainern, befindlich zumindest teilweise oben auf der ersten Gruppe (221, 401-409) der mehreren Versandcontainer (211, 213, 215, 217-219, 221, 231, 241, 401-411) .

10. System (910) nach Anspruch 1, das Folgendes umfasst:
ein Ozeanbodenknotenspeicherungssystem (920), befindlich innerhalb von zweiten mehreren Versandcontainern, befindlich auf dem Hinterdeck des Hochseeschiffes (101, 901); und
ein Ozeanbodenknoteneinsatz- und -bergungssystem (930), befindlich innerhalb von dritten mehreren Versandcontainern, befindlich auf dem Hinterdeck des Hochseeschiffes (101, 901).

11. System (910) nach Anspruch 10, wobei das Ozeanbodenknotenspeicherungssystem zumindest teilweise oben auf dem seismischen Quellenbehandlungssystem (223a-f, 300, 421-426) befindlich ist, wobei das Ozeanbodenknoteneinsatz- und -bergungssystem zumindest teilweise oben auf dem seismischen Quellenbehandlungssystem (223a-f, 300, 421-426) oder dem Ozeanbodenknotenspeicherungssystem befindlich ist.

12. Verfahren zum Einsetzen einer seismischen Quellenanordnung (491-496) von einem Hochseeschiff (101, 901), das Folgendes umfasst:
Einsetzen von mehreren seismischen Quellenanordnungen (491-496) von einem Hinterdeck eines Hochseeschiffs (101, 901) von mehreren Versandcontainern (211, 213, 215, 217-219, 221, 231, 241, 401-411); und
Einsetzen jeder der mehreren seismischen Quellenanordnungen (491-496) durch jeden der mehreren Versandcontainern (211, 213, 215, 217-219, 221, 231, 241, 401-411); wobei
die mehreren Container (211, 213, 215, 217-219, 221, 231, 241, 401-411) quer auf dem Hinterdeck des Hochseeschiffs (101, 901) angeordnet sind; und
mehrere Quellenbehandlungsschienen (223a-f, 421-426) in jedem aus der ersten Gruppe der mehreren Container (211, 213, 215, 217-219, 221, 231, 241, 401-411) befindlich sind.

13. Verfahren zur Installation eines modularen seismischen Quellenanordnungssystems (111, 200, 400, 910) auf einem Hochseeschiff (101, 901), das Folgendes umfasst:
Befestigen eines Rasterbefestigungsrahmens (700) an einem Hinterdeck des Hochseeschiffs (101, 901);
Koppeln von mehreren Containern (211, 213, 215, 217-219, 221, 231, 241, 401-411) mit dem Rasterbefestigungsrahmen (700), wobei ein seismisches Quellenbehandlungssystem (223a-f, 300, 421-426) innerhalb von zumindest einigen der mehreren Container (211, 213, 215, 217-219, 221, 231, 241, 401-411) befindlich ist und ausgelegt ist zum Einsetzen und Bergen von mehreren seismischen Quellenanordnungen (491-496) vom Hinterdeck des Hochseeschiffs (101, 901) in ein bzw. aus einem Gewässer; und
Koppeln einer abnehmbaren Gleitbahn (251, 501) mit einem hinteren Teil des Hochseeschiffs (101, 901) durch mehrere ISO-Verbindungen (610); wobei
die erste Gruppe der mehreren Container (211, 213, 215, 217-219, 221, 231, 241, 401-411) quer auf dem Hinterdeck des Hochseeschiffs (101, 901) angeordnet ist; und
mehrere Quellenbehandlungsschienen (223a-f, 421-426) in jedem aus der ersten Gruppe der mehreren Container (211, 213, 215, 217-219, 221, 231, 241, 401-411) befindlich sind.

## Revendications

1. Système conteneurisé de sources sismiques (111, 200, 400, 910), comprenant :
une pluralité de conteneurs de transport (211, 213, 215, 217-219, 221, 231, 241, 401-411) situés sur un pont arrière d'un navire (101, 901) ; et
un système de manipulation de sources sismiques comprenant une pluralité de rails de manipulation de sources (223a-f, 300, 421-426) situés à l'intérieur d'un premier groupe (221, 401-409) de la pluralité de conteneurs de transport (211, 213, 215, 217-219, 221, 231, 241, 401-411), dans lequel le système de manipulation de sources sismiques est configuré pour effectuer le déploiement et la récupération d'une pluralité de réseaux de sources sismiques (491-496), depuis le pont arrière du navire jusqu'à un corps d'eau, à travers chacun du premier groupe de la pluralité de conteneurs de transport (211, 213, 215, 217-219, 221, 231, 241, 401-411) ; dans lequel
le premier groupe de la pluralité de conteneurs (211, 213, 215, 217-219, 221, 231, 241, 401-411) est agencé transversalement sur le pont arrière du navire (101, 901) ; et
la pluralité de rails de manipulation de sources (223a-f, 421-426) est située dans chacun du premier groupe de la pluralité de conteneurs (211, 213, 215, 217-219, 221, 231, 241, 401-411).

2. Système (111, 200, 400, 910) selon la revendication 1, comprenant en outre une rampe détachable (251, 501) accouplée à une partie arrière du navire (101, 901) par une pluralité d'interfaces de rampe (601) séparément installées sur le navire (101, 901) .

3. Système (111, 200, 400, 910) selon la revendication 1, comprenant en outre une rampe détachable (251, 501) accouplée à une partie arrière du navire (101, 901) par le biais d'une pluralité de liaisons ISO (610).

4. Système (111, 200, 400, 910) selon la revendication 1, comprenant en outre une rampe détachable (251, 501) accouplée à une partie arrière du navire (101, 901), dans lequel la rampe (251, 501) est configurée pour être transportée jusqu'au navire (101, 901) par l'intermédiaire d'un contenant de transport.

5. Système (111, 200, 400, 910) selon la revendication 1, dans lequel la pluralité de conteneurs de transport (211, 213, 215, 217-219, 221, 231, 241, 401-411) est fixée au pont arrière du navire (101, 901) par un cadre de fixation de grille de conteneurs (700), dans lequel le cadre (700) comprend au moins une pluralité de barres longitudinales (711, 713).

6. Système (111, 200, 400, 910) selon la revendication 1, dans lequel chacun du premier groupe (221, 401-409) de la pluralité de conteneurs (211, 213, 215, 217-219, 221, 231, 241, 401-411) comprend des côtés ouverts ou des parois latérales amovibles.

7. Système (111, 200, 400, 910) selon la revendication 1, dans lequel la pluralité de conteneurs de transport (211, 213, 215, 217-219, 221, 231, 241, 401-411) comprend un conteneur central de système (211) qui est configuré pour accoupler tous les raccords électriques et fluidiques depuis le navire (101, 901) au système conteneurisé de sources (111, 200, 400, 910).

8. Système (910) selon la revendication 1, comprenant en outre un système de stockage de noeuds de fond d'océan (920) situé à l'intérieur d'une deuxième pluralité de conteneurs de transport située au moins partiellement par-dessus le premier groupe (221, 401-409) de la pluralité de conteneurs de transport (211, 213, 215, 217-219, 221, 231, 241, 401-411).

9. Système (910) selon la revendication 8, comprenant en outre un système de déploiement ou de récupération de noeuds de fond d'océan (930) situé à l'intérieur d'une troisième pluralité de conteneurs de transport située au moins partiellement par-dessus le premier groupe (221, 401-409) de la pluralité de conteneurs de transport (211, 213, 215, 217-219, 221, 231, 241, 401-411).

10. Système (910) selon la revendication 1, comprenant :
un système de stockage de noeuds de fond d'océan (920) situé à l'intérieur d'une deuxième pluralité de conteneurs de transport située sur le pont arrière du navire (101, 901) ; et
un système de déploiement ou de récupération de noeuds de fond d'océan (930) situé à l'intérieur d'une troisième pluralité de conteneurs de transport située sur le pont arrière du navire (101, 901).

11. Système (910) selon la revendication 10, dans lequel le système de stockage de noeuds de fond d'océan est situé au moins partiellement par-dessus le système de manipulation de sources sismiques (223a-f, 300, 421-426), dans lequel le système de déploiement ou de récupération de noeuds de fond d'océan est situé au moins partiellement par-dessus le système de manipulation de sources sismiques (223a-f, 300, 421-426) ou système de stockage de noeuds de fond d'océan.

12. Procédé de déploiement d'un réseau de sources sismiques (491-496) depuis un navire (101, 901), comprenant :
le déploiement d'une pluralité de réseaux de sources sismiques (491-496), depuis un pont arrière d'un navire (101, 901), d'une pluralité de conteneurs de transport (211, 213, 215, 217- 219, 221, 231, 241, 401-411) ; et
le déploiement de chacun de la pluralité de réseaux de sources sismiques (491-496) à travers chacun de la pluralité de conteneurs de transport (211, 213, 215, 217-219, 221, 231, 241, 401-411) ; dans lequel
la pluralité de conteneurs (211, 213, 215, 217-219, 221, 231, 241, 401-411) est agencée transversalement sur le pont arrière du navire (101, 901) ; et
une pluralité de rails de manipulation de sources (223a-f, 421-426) est située dans chacun du premier groupe de la pluralité de conteneurs (211, 213, 215, 217-219, 221, 231, 241, 401-411).

13. Procédé d'installation d'un système de réseau de sources sismiques modulaires (111, 200, 400, 910) sur un navire (101, 901), comprenant :
la fixation d'un cadre de fixation de grille (700) à un pont arrière du navire (101, 901) ;
l'accouplage d'une pluralité de conteneurs (211, 213, 215, 217-219, 221, 231, 241, 401-411) au cadre de fixation de grille (700), dans lequel un système de manipulation de sources sismiques (223a-f, 300, 421-426) est situé à l'intérieur d'au moins certains de la pluralité de conteneurs (211, 213, 215, 217-219, 221, 231, 241, 401-411) et est configuré pour effectuer le déploiement et la récupération d'une pluralité de réseaux de sources sismiques (491-496), depuis le pont arrière du navire (101, 901) jusqu'à un corps d'eau ; et
l'accouplage d'une rampe détachable (251, 501) à une partie arrière du navire (101, 901) par le biais d'une pluralité de liaisons ISO (610) ; dans lequel
le premier groupe de la pluralité de conteneurs (211, 213, 215, 217-219, 221, 231, 241, 401-411) est agencé transversalement sur le pont arrière du navire (101, 901) ; et
une pluralité de rails de manipulation de sources (223a-f, 421-426) est située dans chacun du premier groupe de la pluralité de conteneurs (211, 213, 215, 217-219, 221, 231, 241, 401-411).
